# EUROPÄISCHE PATENTSCHRIFT

(11) **EP 2 902 250 B1**
(45) Veröffentlichungstag und Bekanntmachung des Hinweises auf die Patenterteilung: **21.06.2017**
(21) Anmeldenummer: 14199334.5
(22) Anmeldetag: 19.12.2014
(51) Int. Cl.: H02J 7/00, B60L 11/18

(54) **Verfahren zum Laden eines elektrisch betreibbaren Fahrzeugs**
Method for charging an electrically operated vehicle
Procédé de charge d'un véhicule automobile électrique

(30) Priorität: 19.12.2013 DE 102013114582
(43) Veröffentlichungstag der Anmeldung: 05.08.2015
(73) Patentinhaber: Elektro-Bauelemente GmbH, 44536 Lünen (DE)
(72) Erfinder: Kachouh, Checrallah, 44227 Dortmund (DE)
(74) Vertreter: Wickord, Wiro

(56) Entgegenhaltungen:
- EP-A1- 2 669 855
- WO-A1-2013/023701
- US-A1- 2012 200 256

## Beschreibung

Die Erfindung betrifft ein Verfahren zum Laden eines elektrisch betreibbaren Fahrzeugs an einem Ladepunkt einer eine Mehrzahl von Ladepunkten aufweisenden und an ein Versorgungsnetz angeschlossenen Ladestation umfassend die folgenden Schritte:
- unter Berücksichtigung eines seitens eines Ladekabels zulässigen maximalen Ladekabelstroms und unter Berücksichtigung eines maximal zulässigen Grenzladestroms auf Seiten des Ladepunkts der Ladestation wird ein maximal zulässiger Soll-Ladestrom zum Laden des Fahrzeugs bestimmt;
- der maximal zulässige Soll-Ladestrom wird dem Fahrzeug vonseiten der Ladestation mitgeteilt;
- ein Ist-Ladestrom, welcher über ein in dem Fahrzeug vorgesehenes Ladegerät unter Beachtung des maximal zulässigen Soll-Ladestroms und eines fahrzeugseitig maximal zulässigen Fahrzeug-Ladestroms für den Ladepunkt eingestellt wird, wird aufseiten der Ladestation gemessen.

Beispielsweise auf öffentlichen Parkplätzen werden heute Ladestationen mit einer Mehrzahl von Ladepunkten betrieben. Die Ladepunkte sind in der Regel verteilt über den Parkplatz angeordnet und beispielsweise einzelnen Parkbuchten zugeordnet. Die Ladestation selbst ist an ein Versorgungsnetz, beispielsweise ein öffentliches Stromnetz, angeschlossen. Innerhalb der Ladestation erfolgt die Verkabelung der verschiedenen Ladepunkte.

Regelmäßig sind die Ladepunkte der Ladestation so ausgebildet, dass ein Fahrzeug bei einer Spannung von 400 V 3-phasig bei einem Ladestrom von 32 A geladen werden kann. Hieraus ergibt sich für den Ladepunkt eine spezifizierte Nennleistung von zirka 22 kW. Gleichwohl können Fahrzeuge auch bei einer geringeren Spannung oder 1-phasig beziehungsweise mit einem geringeren Ladestrom geladen werden. Demzufolge ist zwar jeder einzelne Ladepunkt der Ladestation für die Nennleistung ausgelegt. Gleichwohl kann an der Ladestation üblicherweise nicht zeitgleich an jedem Ladepunkt die maximale Leistung bereitgestellt werden. Hierzu sind die Komponenten der Ladestation in der Regel nicht ausgelegt. Andernfalls wäre die Ladestation für die allermeisten Betriebsszenarien überdimensioniert und unnötig teuer. In der Praxis hat sich nämlich gezeigt, dass selten zeitgleich an allen Ladepunkten die maximale Leistung nachgefragt wird. Insofern wird die Ladestation in der Praxis auf eine Maximalleistung ausgelegt, welche geringer ist als die im theoretischen Fall über die verschiedenen Ladepunkte gleichzeitig abrufbare Nennleistung.

Sofern in der Praxis gleichwohl eine Ladeleistung an der Ladestation abgenommen werden soll, welche höher ist als die spezifizierte Maximalleistung der Ladestation, bedarf es eines sogenannten Lastmanagements. Im Rahmen des Lastmanagements wird geregelt, welcher Ladepunkt beziehungsweise welches hieran angeschlossene Fahrzeug mit welcher Leistung geladen werden kann. In der Praxis haben sich hierbei verschiedene Betriebs- beziehungsweise Zuteilungsszenarien durchgesetzt. Beispielsweise ist bekannt, die zuerst an die Ladestation angeschlossenen Fahrzeuge mit der maximalen Leistung zu bedienen und das Leistungsangebot für später hinzugekommene Fahrzeuge zu reduzieren. Ebenso ist bekannt, bei einer sehr hohen Leistungsnachfrage die verschiedenen Fahrzeuge reihum für ein definiertes Zeitintervall mit dem maximalen Ladestrom zu versorgen und nach Ablauf des Zeitintervalls den Ladevorgang zu unterbrechen. Weiter ist bekannt, alle an die Ladestation angeschlossenen Fahrzeuge gleichmäßig zu bedienen und jeweils eine Leistung unterhalb der spezifizierten Nennleistung bereitzustellen.

Die zuvor beschriebenen Ansätze zur Realisierung des Lastmanagements an einer Ladestation folgen einer vorbestimmten, fix definierten beziehungsweise festen Ablaufroutine. Darüber hinaus sind Ansätze bekannt, bei denen das Lastmanagement auf Basis von Erfahrungswerten und einer für die Zukunft antizipierten Belegung der Ladestation realisiert wird. Beispielsweise beschreiben die DE 10 2009 036 816 A1 und die WO 2013/023695 A1 prognosegestützte Ladeverfahren, welche sich auf sogenannte Lastprognosen beziehungsweise empirisch ermittelte Ladekurvensets stützen. Die Lastprognosen werden beispielsweise ermittelt, indem Vergangenheitswerte über die im Tageszeitverlauf beziehungsweise im Wochenverlauf schwankende Belastung der Ladestation gesammelt und statistisch aufbereitet werden. Berücksichtigung findet hierbei zum Beispiel, dass eine Vielzahl von Elektrofahrzeugen nach Feierabend geladen wird, wenn die Nutzer nach Hause kommen und das Fahrzeug an einen Ladepunkt der Ladestation anschließen. Das Ladekurvenmodell sieht demgegenüber vor, historische Daten über die im Zeitverlauf typischerweise schwankende Ladeleistung als Prognosemodell dem Ladevorgang zugrunde zu legen. Berücksichtigt wird beispielsweise, dass die Ladeleistung zum Ende des Ladevorgangs üblicherweise geringer ist als zu Beginn des Ladevorgangs. Gemein ist insofern beiden Ansätzen, dass die voraussichtlich während des Ladevorgangs nachgefragte Ladeleistung anhand von Vergangenheitswerten im Vorfeld antizipiert beziehungsweise vorausberechnet wird und bei der Ressourcenplanung Berücksichtigung findet.

Unabhängig von der konkreten Ausgestaltung des Lastmanagements wird die Ladeleistung in der Regel über den fahrzeugseitig eingestellten Ist-Ladestrom und die Spannung bestimmt. Beispielsweise empfängt ein in dem Fahrzeug vorgesehenes Ladegerät vonseiten der Ladestation eine Information über einen maximal zulässigen Soll-Ladestrom und stellt die Parameter des Ladevorgangs so ein, dass der maximal zulässige Soll-Ladestrom nicht überschritten wird.

Am Markt verbreitet ist das sogenannte Mode-3-Laden. Hierbei kommuniziert die Ladestation monodirektional mit dem Fahrzeug und überträgt den maximal zulässigen Soll-Ladestrom in Form eines PWM-Signals über das Ladekabel an das Ladegerät des Fahrzeugs. Eine Kommunikation in die Gegenrichtung, das heißt eine Kommunikation vom Fahrzeug an die Ladestation, ist beim Mode-3-Laden nur rudimentär ausgebildet. Demzufolge kann eine Betriebssituation eintreten, in der dem Fahrzeug vonseiten des Ladepunkts ein maximal zulässiger Soll-Ladestrom von zum Beispiel 32 A mitgeteilt wird und an der Ladestation eine Ladestromreservierung über 32 A durchgeführt wird. Sofern das Fahrzeug beispielsweise für ein 1-phasiges Laden an 220 V bei 16 A ausgelegt ist, wird seitens des Fahrzeugs gleichwohl nur eine Ladeleistung von etwa 3,7 kW nachgefragt beziehungsweise mit dem fahrzeugseitig vorgegebenen Ist-Ladestrom von 16 A geladen. Aufseiten der Ladestation ist dennoch für den Ladepunkt ein Strom von 32 A beziehungsweise eine Leistung von 22 kW (400 V 3-phasig, 32 A) reserviert.

Aufgabe der vorliegenden Erfindung ist es, ein Verfahren zum Laden eines Elektrofahrzeugs an einem Ladepunkt einer Ladestation derart weiterzubilden, dass die zur Verfügung gestellten Ressourcen der Ladestation besser ausgenutzt werden.

Zur Lösung der Aufgabe ist die Erfindung in Verbindung mit dem Oberbegriff des Patentanspruchs 1 dadurch gekennzeichnet, dass an der Ladestation für den Ladepunkt eine Ladestromreservierung in Höhe eines für den Ladepunkt durch die Hardware des Ladepunkts spezifizierten, maximal bereitstellbaren Grenzladestroms und/oder des dem Fahrzeug angebotenen maximal zulässigen Soll-Ladestroms durchgeführt wird, dass eine Ladestromdifferenz zwischen dem seitens der Ladestation dem Fahrzeug angebotenen, maximal zulässigen Soll-Ladestrom oder dem an dem Ladepunkt maximal bereitstellbaren Grenzladestrom einerseits und dem gemessenen Ist-Ladestrom andererseits bestimmt wird und dass die Ladestromreservierung hinsichtlich der bestimmten Ladestromdifferenz freigegeben wird.

Der besondere Vorteil der Erfindung besteht darin, dass infolge einer temporären Ladestromreservierung und eines Reservierungsfreigabeschritts die von der Ladestation zur Verfügung gestellten Ressourcen in optimierter Weise genutzt werden können. Die optimierte Nutzung der Ressourcen verbessert zum einen die Wirtschaftlichkeit der Ladestation für den Betreiber, da insbesondere in Spitzenzeiten die Nichtnutzung von Laderessourcen vermieden wird. Zum anderen optimiert das erfindungsgemäße Ladeverfahren jeden einzelnen Ladevorgang dahingehend, dass die insgesamt zur Verfügung stehenden Ressourcen optimal auf die verschiedenen Fahrzeuge allokiert werden und jedes einzelne Fahrzeug mit einem möglichst hohen Ist-Ladestrom innerhalb kurzer Zeit geladen werden kann.

Erfindungsgemäß sieht das Verfahren vor, dass separat für jeden Ladepunkt der Ladestation ein maximal zulässiger Soll-Ladestrom für das an dem Ladepunkt über ein Ladekabel angeschlossene elektrische Fahrzeug ermittelt wird. Bei der Ermittlung des maximal zulässigen Soll-Ladestroms wird zum einen die Spezifikation des Ladekabels berücksichtigt. Insbesondere wird hierbei sichergestellt, dass ein vonseiten des Ladekabels maximal zulässiger Ladekabelstrom nicht überschritten wird. Des Weiteren wird geprüft, welchen maximalen zulässigen Grenzladestrom die Ladestation an dem ausgewählten Ladepunkt bereitstellen kann. Diese Prüfung berücksichtigt neben der individuellen Hardwarespezifikation des Ladepunkts insbesondere die Nutzung der Laderessourcen innerhalb der gesamten Ladestation. Beispielsweise wird berücksichtigt, dass die maximale Ladeleistung der Ladestation begrenzt ist und dass an parallelen Ladepunkten wenigstens ein Teilbereich dieser Ladeleistung bereits zur Verfügung gestellt wird. Der maximal zulässige Grenzladestrom an dem ausgewählten Ladepunkt kann demzufolge maximal sein, wenn die Ressourcen der Ladestation nicht vollständig genutzt sind und für den ausgewählten Ladepunkt freie Ressourcen in Höhe des nach der Hardwarespezifikation maximal bereitstellbaren Grenzladestroms - etwa 32 A beim 3-phasigen Laden an 400 V - bereitgestellt werden können. Ebenso kann der maximal zulässige Soll-Ladestrom für den Ladepunkt unterhalb des durch die Hardwarespezifikation dieses Ladepunkts bestimmten maximal bereitstellbaren Grenzladestroms liegen, wenn die Ressourcen der Ladestation bereits in einem Maß genutzt beziehungsweise allokiert sind, dass die freien Ressourcen geringer sind als der aufgrund der Hardwarespezifikation theoretisch mögliche, das heißt maximal bereitstellbare Grenzladestrom für den Ladepunkt. Beispielsweise kann aufgrund von Ressourcenknappheit statt des maximal bereitstellbaren Grenzladestroms von 32 A beim 3-phasigem Laden an 400 V ein maximal zulässiger Grenzladestrom von lediglich 16 A oder 20 A festgelegt werden. Sofern die Spezifikation des Ladekabels einen Ladestrom vom 32 A zulässt, wird der Soll-Ladestrom dem maximal zulässigen Grenzladestrom entsprechend auf 16 A oder 20 A eingestellt.

Ebenfalls Bestandteil der Erfindung ist, dass der maximal zulässige Soll-Ladestrom beziehungsweise der an dem Ladepunkt maximal bereitstellbare Grenzladestrom gegenüber der Ladestation reserviert wird. Beispielsweise werden der maximal bereitstellbare Grenzladestrom beziehungsweise der maximal zulässige Soll-Ladestrom auf Seiten des Ladepunkts bestimmt. Beispielsweise erfolgt die Bestimmung aufseiten der Ladestation. Ebenso kann für die Ladestation mit der Mehrzahl der Ladepunkt eine zentrale Datenverarbeitungseinheit vorgesehen sein und die maximal zulässigen Soll-Ladeströme für die Ladepunkte bestimmen. Die Ladestromreservierung wird dann auf Seiten der Ladestation zentral durchgeführt. Die Ladestation selbst bestimmt so aus den an den verschiedenen Ladepunkten bereitgestellten Ladeströmen den aktuellen Nutzungsgrad ihrer Ressourcen insgesamt und erkennt demzufolge, ob ein neu angeschlossenes Fahrzeug beschränkungsfrei geladen werden kann oder ob die Ressourcen der Ladestation ein Laden eines weiteren Fahrzeugs gegenwärtig nicht erlauben oder nur ein beschränktes Laden eines weiteren Fahrzeugs möglich ist. Die Ladestromreservierung in Höhe des für den Ladepunkt bereitstellbaren Grenzladestroms beziehungsweise des dem Fahrzeug angebotenen maximal zulässigen Soll-Ladestroms wird bevorzugt durchgeführt, bevor die Mitteilung über den maximal bereitstellbaren Grenzladestrom beziehungsweise den maximal zulässigen Soll-Ladestrom an das Fahrzeug gemacht wird.

Die Ladestromreservierung einer Ladestation insgesamt entspricht jeweils wenigstens der Summe der Ist-Ladeströme an den Ladepunkten. Die Ladestromreservierung kann insbesondere höher sein, wenn im Rahmen eines neu zu startenden Ladevorgangs oder einer Anpassung der Betriebsparameter für einen laufenden Ladevorgang einem Fahrzeug ein neu festgelegter, höherer Soll-Ladestrom angeboten wird. Für eine Übergangszeit liegt dann über den für den Ladepunkt spezifizierten Soll-Ladestrom oder den maximal bereitstellbaren Grenzladestrom eine Ladestromreservierung vor.

Weiter sieht das Verfahren vor, dass der fahrzeugseitig tatsächlich eingestellte Ist-Ladestrom gemessen wird. Sofern festgestellt wird, dass der Ist-Ladestrom geringer ist als der von der Ladestation an das Fahrzeug gemeldete maximal zulässige Soll-Ladestrom beziehungsweise der maximal bereitstellbaren Grenzladestrom, wird die Ladestromreservierung hinsichtlich der Ladestromdifferenz zwischen dem Ist-Ladestrom einerseits und dem maximal zulässigen Soll-Ladestrom beziehungsweise dem seitens der Ladestation maximal bereitstellbaren Grenzladestrom andererseits freigegeben. Die Ladestrommessung dient insbesondere dazu, den fahrzeugseitigen Ladestrombedarf (Ist-Ladestrom) zu ermitteln und ladepunktübergreifend auf der Ebene der Ladestation die Ressourcenallokation in optimaler Weise auf den Ladestrombedarf der verteilt angeordneten Ladepunkte abzustimmen. Wird bezüglich eines Ladepunkts festgestellt, dass theoretisch ein höherer Ladestrom (maximal zulässiger Soll-Ladestrom) zur Verfügung gestellt werden kann als vom Fahrzeug nachgefragt wird, wird das Ladestrom-Angebot an dem Ladepunkt reduziert mit der Folge, dass die Ladestromreservierung angepasst und für die verbleibenden Ladepunkte eine größere Reststrommenge beziehungsweise Leistungsreserve bereitgestellt werden kann.

Auch wenn das erfindungsgemäße Verfahren hier am Beispiel des Mode-3-Ladens dargestellt ist und beim Mode-3-Laden aufgrund der eingeschränkten bidirektionalen Kommunikation zwischen dem Fahrzeug und der Ladestation besondere Vorteile bietet, ist es nicht hierauf beschränkt. Beispielsweise kann das Verfahren auch bei anderen Kommunikationsroutinen, beispielsweise einer in der IEC15118 festgelegten Kommunikationsroutine mit der Möglichkeit zum bidirektionalen Datenaustauch zwischen der Ladestation und dem Fahrzeug, zur Anwendung kommen.

Anders als die bekannten, auf vergangenheitsbasierten Prognosedaten gestützten Lastmanagementverfahren wird nach dem erfindungsgemäßen Verfahren allein auf Momentanwerte zurückgegriffen. Es wird insbesondere auf die zum Zeitpunkt der Bestimmung des zulässigen Soll-Ladestroms fahrzeugseitig, ladekabelseitig beziehungsweise aufseiten der Ladestation gültigen Hardwarespezifikationen und die aktuelle Ressourcenallokation abgestellt. Informationen über vermutete beziehungsweise antizipierte Schwankungen der Ladelast in den nächsten Minuten, Stunden oder Tagen finden bei der Bestimmung der Betriebsparameter keine Berücksichtigung. Insofern besteht nach dem erfindungsgemäßen Verfahren nicht das Risiko, dass die Ressourcenplanung ungenau ist und die zukünftig bereitzustellende Ladeleistung die aufseiten der Ladestation tatsächlich bereitstehende Ladeleistung übersteigt. Vielmehr wird im Sinne einer optimalen Ressourcenallokation und unter Berücksichtigung der durch die Hardwarespezifikation vorgegebenen Grenzen der aufgrund der momentanen Belegung der Ladestation optimale, das heißt maximal zulässige Soll-Ladestrom bestimmt. Ändert sich die Lastsituation beispielsweise durch die Freigabe von Ressourcen, kann die Ressourcenallokation neu durchgeführt werden und der Soll-Ladestrom neu bestimmt werden. Jedoch wird auch bei der neuerlichen Ressourcenallokation der tatsächlichen Situation unbedingt Rechnung getragen und es werden die Momentanwerte im Zeitpunkt der Neufestlegung berücksichtigt. Es besteht insofern niemals das Risiko, dass aufgrund von Abweichungen zwischen der Lastprognose einerseits und der tatsächlichen Lastsituation andererseits ein Ressourcenengpass entsteht oder ein Fahrzeug mit einem reduzierten Ladestrom geladen wird, obwohl freie Ressourcen zur Verfügung stehen.

Als Ladestation im Sinne der Anmeldung gelten alle Vorrichtungen zum Bereitstellen elektrischer Energie für elektrisch betreibbare Fahrzeuge. Beispielsweise kann die Ladestation als Baueinheit, beispielsweise als frei stehende Ladesäule oder als wandmontierbare Wallbox ausgeführt sein. Beispielsweise kann die Ladestation als verteilte Ladestation mit dezentralen Ladepunkten und einer gemeinsamen Steuereinheit ausgeführt sein. Beispielsweise kann ein gemeinsame Steuereinheit zum Durchführen des Verfahrens zentral oder verteilt in der Ladestation vorgesehen sein. Beispielsweise kann eine übergeordnete Zentralsteuereinheit zur Durchführung des Verfahrens und/oder zur Steuerung einer Mehrzahl von Ladestationen vorgesehen werden.

Nach einer bevorzugten Ausführungsform der Erfindung wird ein der Ladestation zugeordneter und für den einzelnen Ladepunkt bestimmter Datenspeicher beschrieben, sobald vonseiten der Ladestation über den jeweiligen Ladepunkt dem zu ladenden Fahrzeug ein maximal zulässiger Soll-Ladestrom erstmalig angeboten wird. Der Datenspeicher wird aktualisiert oder gelöscht, sobald in Reaktion auf das erste Ladestrom-Angebot oder ein späteres Ladestrom-Angebot der seitens des Fahrzeugs eingestellte Ist-Ladestrom geringer gewählt wird als der vonseiten der Ladestation angebotene, maximal zulässige Soll-Ladestrom. Vorteilhaft kann durch den Datenspeicher auch rückwirkend geprüft werden, ob ein Fahrzeug in der Vergangenheit einen vonseiten der Ladestation angebotenen, maximal zulässigen Soll-Ladestrom nicht vollständig genutzt hat. Für dieses Fahrzeug wird dann ein höherer Soll-Ladestrom während des laufenden Ladevorgangs nicht mehr angeboten werden und eine angepasste Ladestromreservierung nicht durchgeführt werden mit der Folge, dass die anderen Ladepunkte der Ladestation für die Dauer des in Rede stehenden Ladevorgangs Zugriff auf die nicht nachgefragten beziehungsweise nicht genutzten Ressourcen erhalten. Beispielsweise kann unter Zugriff auf den Datenspeicher der Ladestation einem Fahrzeug ein höherer Soll-Ladestrom auch dann verweigert werden, wenn Laderessourcen etwa durch das Trennen eines anderen Fahrzeugs von der Ladestation frei werden, sofern das Fahrzeug in der Vergangenheit ein Ladestrom-Angebot nicht akzeptiert beziehungsweise einen geringeren als den angebotenen Soll-Ladestrom eingestellt hat.

Demgegenüber kann ein Fahrzeug, welches über ein für einen Ladestrom vom 32 A spezifiziertes Ladekabel neu an einem Ladepunkt der Ladestation angeschlossen ist, während die Ladestation stark frequentiert ist, mitunter zu Beginn des Ladevorgangs nur mit einem vergleichsweise geringen Ist-Ladestrom geladen werden. Beispielsweise kann das neue Fahrzeug für ein 3-phasiges Laden an 400 V bei 32 A ausgelegt sein, während seitens der Ladestation aufgrund der Belegung der Ladestation temporär lediglich 16 A bereitgestellt werden können. Sofern parallel geladene Fahrzeuge von der Ladestation getrennt werden, der Ladevorgang für die parallel angeschlossenen Fahrzeuge beendet ist oder der Ist-Ladestrom an den anderen Ladepunkten der Ladestation sinkt, ändert sich die Belastung der Ladestation und reservierte Ressourcen werden freigegeben. Es kann dann dem in Rede stehenden neuen Fahrzeug von dem Ladepunkt ein höherer maximal zulässiger Soll-Ladestrom, beispielsweise ein durch die Hardwarespezifikation des Ladepunkts definierte maximal bereitstellbarer Grenzladestrom von 32 A, angeboten werden. Sofern seitens des Fahrzeugs der ursprünglich angebotene Soll-Ladestrom von 16 A akzeptiert und jedenfalls nicht unterschritten wurde, ist in dem Datenspeicher ein Ausschlagen des LadestromAngebots nicht vermerkt. Vonseiten der Ladestation wird dann infolge der freigewordenen Laderessourcen ein größerer, maximal zulässiger Soll-Ladestrom angeboten, beispielsweise in Höhe von 32 A. Fahrzeugseitig kann dieses Angebot akzeptiert und ein Ist-Ladestrom in Höhe des neu angebotenen, maximal zulässigen Soll-Ladestroms eingestellt werden.

Sofern im vorstehenden Beispiel bei ansonsten gleichen Annahmen das neu an die Ladestation angeschlossene Fahrzeug mit maximal 20 A geladen werden kann, ändert sich aufgrund der Ressourcenknappheit zunächst nichts. Der Ladevorgang wird aufgrund der Belegungssituation der Ladestation zu Beginn mit lediglich 16 A erfolgen. Sobald Ressourcen an anderen Ladepunkten der Ladestation freigegeben werden, wird aufseiten der Ladestation erkannt, dass der Ladevorgang für das Fahrzeug nicht mit dem maximal zulässigen Grenzladestrom von 32 A, sondern mit dem reduzierten Soll-Ladestrom von 16 A erfolgt. Die Erkennung erfolgt beispielsweise durch einen Vergleich des auf Seiten der Ladestation gemessenen Ist-Ladestroms mit dem Soll-Ladestrom. Ferner wird auf Seiten der Ladestation durch Auslesen des Datenspeichers erkannt, dass das mit 16 A geladene Fahrzeug während des laufenden Ladevorgangs noch nie ein Soll-Ladestromangebot abgelehnt hat, das heißt den Ist-Ladestrom unterhalb des Soll-Ladestroms eingestellt hat. Insofern wird dem Fahrzeug von der Ladestation mitgeteilt, dass nunmehr der maximal zulässige Soll-Ladestrom in Höhe des maximal zulässigen Grenzladestroms, das heißt ein maximal zulässiger Soll-Ladestrom in Höhe von 32 A festgelegt wird. Fahrzeugseitig kann dieses Angebot jedoch nicht akzeptiert werden, da das Fahrzeug allein für ein Laden mit 20 A ausgelegt ist. Insofern wird fahrzeugseitig ein Ist-Ladestrom von 20 A eingestellt. Der Ist-Ladestrom wird aufseiten der Ladestation gemessen und es wird festgestellt, dass der Ist-Ladestrom geringer gewählt wird als der vonseiten der Ladestation angebotene maximal zulässige Soll-Ladestrom. Entsprechend wird der Datenspeicher für den Ladepunkt aktualisiert beziehungsweise gelöscht. Ein neuerliches Angebot zum Erhöhen des Ladestroms über die 20 A hinaus wird dem an dem Ladepunkt angeschlossenen Fahrzeug dann nie mehr oder jedenfalls für eine gewisse Zeitdauer oder ein Ladeintervall nicht mehr unterbreitet. Das Ladeintervall bestimmt sich beispielsweise über eine in den Energiespeicher des Fahrzeugs eingespeiste Energiemenge.

Analog wird verfahren, wenn einem neu an den Ladepunkt angeschlossenen Fahrzeug unmittelbar beim Anschließen desselben an die Ladestation ein maximal zulässiger Soll-Ladestrom angeboten wird und der Ist-Ladestrom fahrzeugseitig geringer gewählt wird: Wird das neu an den Ladepunkt angeschlossene Fahrzeug mit einem Ist-Ladestrom vom 16 A geladen und wurde demselben Fahrzeug von Seiten der Ladestation zuvor bereits ein Soll-Ladestrom von zum Beispiel 32 A an 400 V 3-phasig angeboten, so ist der Datenspeicher aktualisiert beziehungsweise gelöscht. Ein neuerliches Angebot zum Erhöhen des Ladestroms über die 16 A hinaus wird dem an dem Ladepunkt angeschlossenen Fahrzeug selbst dann nicht mehr unterbreitet, wenn Ressourcen der Ladestation frei werden.

In dem Datenspeicher kann beispielsweise nach Art einer I/O-Flag oder eines Merkers hinterlegt werden, ob an dem zugeordneten Ladepunkt der angebotene maximal zulässige Soll-Ladestrom vonseiten des Fahrzeugs ausgeschlagen wurden. Hierzu wird der Datenspeicher im Zuge des ersten Ladestromangebots an das Fahrzeug auf einen ersten Datenwert gesetzt. Solange der Ist-Ladestrom durch das Fahrzeug nicht unterhalb des angebotenen maximal zulässigen Soll-Ladestroms bestimmt wird, ändert sich der Datenwert des Datenspeichers nicht. Wird jedoch fahrzeugseitig der Ist-Ladestrom unter den maximal zulässigen Soll-Ladestrom abgesenkt, wird der Datenspeicher aktualisiert, das heißt umgeschrieben beziehungsweise gelöscht. Die Ladestation erkennt dann anhand des in dem Datenspeicher hinterlegten Datenwerts, dass ein Ladestromangebot ausgeschlagen wurde. Beispielsweise kann dies dazu führen, dass dem Fahrzeug während des aktuellen Ladevorgangs ein maximal zulässiger Soll-Ladestrom oberhalb des aktuellen Ist-Ladestroms nicht mehr angeboten wird mit der Folge, dass der Ladestrom für das Fahrzeug auf den Wert des aktuellen Ist-Ladestroms begrenzt wird.

Beispielsweise kann der Datenspeicher ausgebildet sein zur Speicherung von Ladestromwerten. Es kann insbesondere vorgesehen sein, dass ein Ladelimitstrom gespeichert wird. Insbesondere kann der Datenspeicher beim Initiieren des Ladevorgangs zurückgesetzt beziehungsweise gelöscht werden. Beispielsweise kann der maximal zulässige Soll-Ladestrom oder der maximal bereitstellbare Grenzladestrom in den Datenspeicher geschrieben werden. Während des laufenden Ladevorgangs kann dann der aktuelle vom Fahrzeug eingestellte Ist-Ladestrom als Ladelimitstrom in den Datenspeicher geschrieben werden, sofern der Ist-Ladestrom geringer gewählt ist als der vonseiten der Ladestation angebotene Soll-Ladestrom.

Nach einer Weiterbildung der Erfindung kann ein seitens der Ladestation maximal bereitstellbarer Volllastladestrom dynamisch bestimmt beziehungsweise situativ neu festgelegt werden. Beispielsweise kann der maximal bereitstellbare Volllastladestrom abhängig von der sonstigen Belastung im Versorgungsnetz erhöht oder abgesenkt werden. Vorteilhaft ergibt sich hierdurch die Möglichkeit, die an das Versorgungsnetz angeschlossene Ladestation als Puffer zur Stabilisierung des Versorgungsnetzes zu nutzen. Sofern die Netzbelastung im gebotenen Rahmen liegt oder einen Grenzwert nicht überschreitet, kann an der Ladestation ein maximaler Volllastladestrom beziehungsweise eine maximale Volllastleistung angeboten werden. Ist demgegenüber die Belastung im Versorgungsnetz unzulässig hoch, kann das Leistungsangebot der Ladestation reduziert werden.

Nach einer Weiterbildung der Erfindung kann der maximal zulässige Grenzladestrom für einen Ladepunkt der Ladestation dynamisch festgelegt beziehungsweise neu bestimmt werden. Eine Neufestlegung des maximal zulässigen Grenzladestroms führt zu einer Neufestlegung des maximal zulässigen Soll-Ladestroms des jeweiligen Ladepunkts. Diese Neufestlegung wird insbesondere vorgenommen, wenn ein neues Fahrzeug an die Ladestation angeschlossen wird, wenn sich die Ladestromreservierung für die Ladestation ändert oder wenn der für die Ladestation festgelegte maximale Volllastladestrom etwa infolge von Schwankungen der Belastung im Versorgungsnetz geändert wird. Vorteilhaft erlaubt die dynamische Festlegung des maximalzulässigen Grenzladestroms je Ladepunkt sowie die Neufestlegung des maximal zulässigen Soll-Ladestroms ein flexibles Anpassen der Ladeparameter an das Ressourcenangebot beziehungsweise an die jeweilige Nutzung der zur Verfügung stehenden Ressourcen der Ladestation insgesamt.

Die Betriebsparameter für jeden einzelnen Ladepunkt können neu festgelegt werden, sofern sich an einem beliebigen anderen Ladepunkt der Ladestation eine relevante Änderung ergibt oder sofern die seitens der Ladestation zur Verfügung stehenden Ressourcen etwa aufgrund von Belastungsschwankungen im Versorgungsnetz angepasst werden. Eine Änderung der Ressourcennutzung in der Ladestation ergibt sich beispielsweise, wenn ein Fahrzeug von der Ladestation getrennt wird. Ebenso können sich Änderungen der Nutzung der Ressourcen der Ladestation ergeben, wenn ein angeschlossenes Fahrzeug vollständig geladen ist und der Ladestrom für dieses vollständig geladene Fahrzeug auf Null oder einen Wert nahe Null gesenkt wird. Die Absenkung wird über die Ladestrommessung an dem jeweiligen Ladepunkt erkannt. Infolge der Messung wird die Ladestromreservierung für die Ladestation angepasst, und es kommt zu einer Neufestlegung der maximal zulässigen Soll-Ladeströme für alle anderen Ladepunkt der Ladestation. Eine Anpassung kann ebenfalls erfolgen, wenn der Energiespeicher eines Fahrzeugs nahezu vollständig geladen ist und der Ladestrom für den Restladevorgang auf beispielsweise 80 % des vormaligen Werts abgesenkt wird. Die Ladestromreservierung kann dann wenigstens teilweise freigegeben werden.

Insbesondere kann der Soll-Ladestrom auf ein vorbestimmtes Maß - beispielsweise auf 6 A - abgesenkt werden. Eine Reduzierung des Soll-Ladestroms bis auf Null kann unterbleiben. Es ist dann möglich, den Ist-Ladestrom fahrzeugseitig bedarfsgerecht zu wählen und gegebenenfalls zu erhöhen. Dies ist beispielsweise sinnvoll, wenn der Energiespeicher eines über Nacht an die Ladestation angeschlossenen Fahrzeugs vollständig geladen ist und der Ist-Ladestrom demzufolge im Laufe der Nacht auf Null gesenkt wurde. Sobald morgens das Fahrzeug beheizt oder klimatisiert werden soll, kann der Ist-Ladestrom fahrzeugseitig bis auf das vorbestimmte Maß angehoben wird. Es kann vermieden werden, dass der Energiespeicher des Fahrzeugs durch das Beheizen oder Klimatisieren unzulässig belastet oder entleert wird.

Nach der Erfindung kann der maximal zulässige Soll-Ladestrom im Verlauf des Ladevorgangs bis maximal auf das Niveau des fahrzeugseitig unterhalb des maximal zulässigen Soll-Ladestroms eingestellten Ist-Ladestroms abgesenkt werden. Es wird hierdurch zum einen eine Freigabe der Ladestromreservierung, welche auf Basis des maximal zulässigen Soll-Ladestroms erfolgt ist, bewirkt. Zum anderen wird verhindert, dass fahrzeugseitig der Ist-Ladestrom nachträglich im Laufe des Ladevorgangs über den Soll-Ladestrom hinaus erhöht wird. Dem Fahrzeug kann beispielsweise über das PWM-Signal oder im Wege der High Level-Kommunikation nach IEC15118 der neue Wert für den maximal zulässigen Soll-Ladestrom mitgeteilt werden.

Die Neufestsetzung des maximal zulässigen Soll-Ladestrom kann beispielsweise zeitversetzt in Bezug auf eine Änderung der Ladestromreservierung erfolgen. Wird beispielsweise ein neues Fahrzeug an die Ladestation angeschlossen, beginnt für dieses neue Fahrzeug die Laderoutine mit der Identifikation der Ladeparameter, der Bestimmung des maximal zulässigen Grenzladestrom, des Ladekabelstroms und des Soll-Ladestroms sowie dem Ladestromangebot an das Fahrzeug und der fahrzeugseitigen Wahl des Ist-Ladestroms. Sofern die initialen Schritte eine im Wesentlichen bekanntes Zeitintervall beanspruchen, kann die Anpassung der Ladeparameter für die anderen Ladestationen für dieses Zeitintervall ausgesetzt werden mit der Folge, dass ein stabiler und möglichst gleichmäßiger Ladevorgangs realisiert wird.

Nach einer Weiterbildung der Erfindung ist vorgesehen, dass ein Fahrzeug mit dem maximal bereitstellbaren Grenzladestrom des jeweiligen Ladepunkts geladen wird, sofern seitens der Ladestation entsprechende Ressourcen zur Verfügung stehen und das für den Ladevorgang genutzte Ladekabel sowie das Fahrzeug selbst für den maximal bereitstellbaren Grenzladestrom spezifiziert ist. Es wird insofern zu Beginn eines Ladevorgangs jeweils versucht werden, das an den Ladepunkt angeschlossene Fahrzeug mit der maximalen Ladeleistung beziehungsweise dem maximalen Soll-Ladestrom zu laden. Ausnahmen hiervon gibt es, wenn die zur Verfügung stehenden Ressourcen seitens der Ladestation die Ladeleistung nicht erlauben oder das Fahrzeug selbst beziehungsweise das in der Regel im Fahrzeug mitgeführte Ladekabel für die spezifizierte, maximal bereitstellbare Ladeleistung nicht ausgelegt ist.

Die Freigabe einer Ladestromreservierung kann erfindungsgemäß einstufig oder mehrstufig erfolgen. Beispielsweise kann bei einer einstufigen Freigabe der Ladestromreservierung seitens der Ladestation zunächst der maximal zulässige Soll-Ladestrom ermittelt und als PWM-Signal dem Ladegerät des Fahrzeugs mitgeteilt werden. Zu diesem Zeitpunkt ist beispielsweise gegenüber der Ladestation eine Ladestromreservierung in Höhe des maximal bereitstellbaren Grenzladestroms an dem jeweiligen Ladepunkt durchgeführt. In Kenntnis des maximal zulässigen Soll-Ladestroms wird seitens des Ladegeräts im Fahrzeug der Ist-Ladestrom eingestellt. Der Ist-Ladestrom wird aufseiten der Ladestation gemessen und mit dem maximal bereitstellbaren Grenzladestrom verglichen. Sofern der Ist-Ladestrom geringer ist als der maximal bereitstellbare Grenzladestrom, wird die Reservierung in Höhe der Ladestromdifferenz zwischen dem maximal bereitstellbaren Grenzladestrom und dem Ist-Ladestrom freigegeben.

Beispielsweise kann bei einer ebenfalls einstufigen Freigabe der Ladestromreservierung seitens der Ladestation der maximal zulässige Soll-Ladestrom reserviert werden. Dies erfolgt selbst dann, wenn der maximal bereitstellbare Grenzladestrom für den Ladepunkt größer ist als der Soll-Ladestrom. Mit Beginn des Ladevorgangs wird aufseiten der Ladestation der Ist-Ladestrom gemessen und die Ladestromdifferenz zwischen dem Ist-Ladestrom und dem Soll-Ladestrom ermittelt. Ist der Ist-Ladestrom kleiner als der Soll-Ladestrom, wird die Ladestromreservierung im Umfang der Ladestromdifferenz zwischen dem maximal zulässigen Soll-Ladestrom und dem Ist-Ladestrom aufgehoben. Ebenso erfolgt die Anpassung des Werts für den maximal zulässigen Soll-Ladestrom.

Ebenso kann die Reservierung mehrstufig freigegeben werden. Beispielsweise kann zunächst eine Ladestromreservierung in Höhe des maximal bereitstellbaren Grenzladestroms durchgeführt werden. Der maximal bereitstellbare Grenzladestrom hängt insbesondere von der Spezifikation des Ladepunkts ab. Er beträgt beispielsweise 32 A bei 400 V (3-phasig). Sofern zum Laden des Fahrzeugs ein für lediglich 20 A spezifiziertes Ladekabel Verwendung findet, ist der maximal zulässige Soll-Ladestrom für den betrachteten Ladevorgang durch die Spezifikation des Ladekabels auf 20 A begrenzt. Hier kann bereits die erste Ladestromreservierung in Höhe von 12 A freigegeben werden. Sofern die dem Fahrzeug angebotenen 20 A bei 400 V (3-phasig) vonseiten des Fahrzeugs nicht ausgeschöpft werden und das Fahrzeug beispielsweise bei 16 A geladen wird, kann zum zweiten Mal eine Ladestromreservierung über die Ladestromdifferenz zwischen dem maximal zulässigen Soll-Ladestrom und dem Ist-Ladestrom gegenüber der Ladestation zurückgenommen werden.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Es zeigen:
- Figur 1: eine zur Durchführung des erfindungsgemäßen Verfahrens ausgebildete Ladestation mit exemplarisch zehn Ladepunkten und
- Figur 2: den Verfahrensablauf des erfindungsgemäßen Verfahrens als Blockschaltbild.

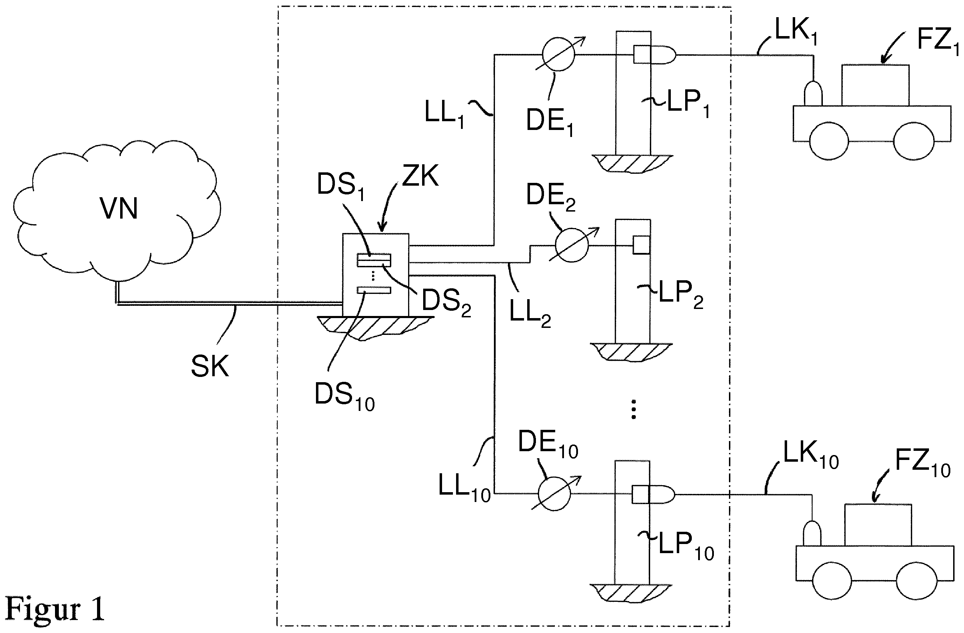

Eine zur Durchführung eines erfindungsgemäßen Verfahrens zum Laden von elektrisch betreibbaren Fahrzeugen ausgebildete Ladestation LS umfasst nach Figur 1 insgesamt zehn Ladepunkte LP₁, LP₂, ... LP₁₀ sowie eine Zentralkomponente ZK. Über die Zentralkomponente ZK und ein Starkstromkabel SK ist die Ladestation LS an ein Versorgungsnetz VN angeschlossen. Interne Ladeleitungen LL₁, LL₂, ... LL₁₀ verbinden die Zentralkomponente ZK mit den Ladepunkten LP₁, LP₂, ... LP₁₀ der Ladestation LS. Im vorliegenden Ausführungsbeispiel soll jeder einzelne Ladepunkt LP₁, LP₂, ... LP₁₀ hardwareseitig so ausgestaltet sein, dass beim 3-phasigen Laden an 400 V ein maximaler Grenzladestrom von 32 A bereitgestellt werden kann: i_{LPi,max} = 32 A. Dies entspricht einer Ladeleistung von 22 kW je Ladepunkt LP₁, LP₂, ... LP₁₀. Die Ladestation LS selbst kann im vorliegenden Beispiel über das Starkstromkabel SK eine maximale Leistung von 100 kW aus dem Versorgungsnetz NV abnehmen. Insofern kann zeitgleich an vier Ladepunkten LP₁, LP₂, ... LP₁₀ die maximale Leistung von 22 kW bereitgestellt werden.

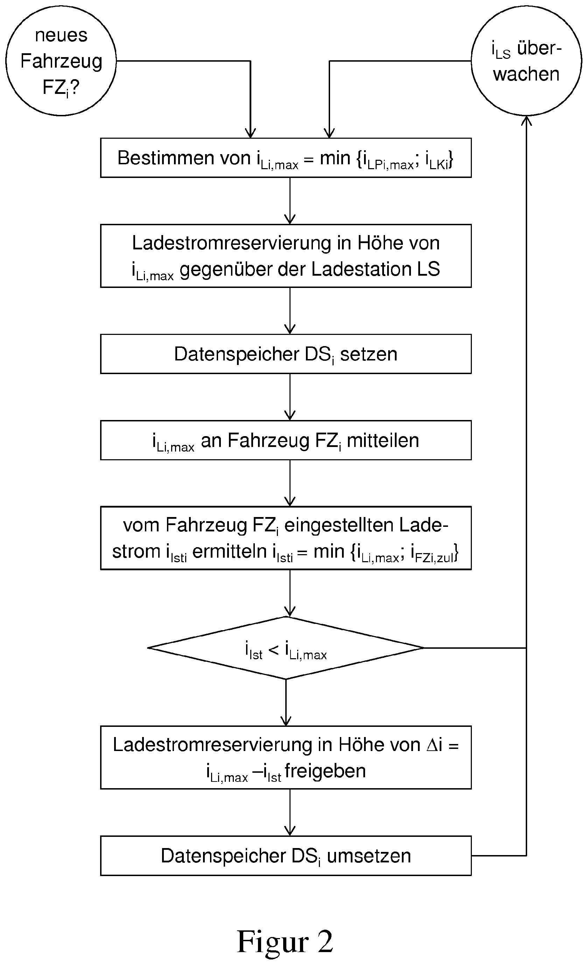

In einem ersten Betriebsszenario für die Ladestation LS sei angenommen, dass an den Ladepunkten LP₇, LP₈, LP₉ (jeweils nicht dargestellt) und LP₁₀ Fahrzeuge FZ₇, FZ₈, FZ₉ (nicht dargestellt) und FZ₁₀ angeschlossen sind und mit der maximalen Leistung von 22 kW beziehungsweise 3-phasig an 400 V bei 32 A geladen werden. Gedanklich wird nun ein weiteres Fahrzeug FZ₁ an dem ersten Ladepunkt LP1 angeschlossen. Für dieses erste Fahrzeug FZ₁ sollen nachfolgend die Initialisierung des Ladevorgangs beschrieben und das erfindungsgemäße Verfahren nach Figur 2 erläutert werden.

Ausgangssituation für das erfindungsgemäße Verfahren ist, dass infolge des Ladevorgangs für die Fahrzeuge FZ₇, FZ₈, FZ₉, FZ₁₀ eine Ladestromreservierung in Höhe von 4 x 32 A = 128 A bei der Ladestation LS durchgeführt ist. Dieser Annahme liegt zugrunde, dass die zu ladenden Fahrzeuge FZ₇, FZ₈, FZ₉, FZ₁₀ für das 3-phasige Laden an 400 V bei 32 A spezifiziert sind und die hierbei verwendeten Ladekabel LK₇, LK₈, LK₉ (jeweils nicht dargestellt) und LK₁₀ der Spezifikation ebenfalls genügen. Ein Soll-Ladestrom i_{L7,max}, i_{L8,max}, i_{L9,max}, i_{L10,max} für die Ladepunkte LP₇, LP₈, LP₉, LP₁₀ entspricht somit dem maximal bereitstellbaren Grenzladestrom i_{LP7,max}, i_{LP8,max}, i_{LP9,max}, i_{LPi10,max} der Ladepunkte LP₇, LP₈, LP₉, LP₁₀ und dem jeweiligen Ist-Ladestrom i_{Ist7}, i_{Ist8}, i_{Ist9}, i_{Ist10}.

Wird nunmehr das erste Fahrzeug FZ₁ über das Ladekabel LK₁ an den ersten Ladepunkt LP₁ der Ladestation LS angeschlossen, erkennt die Ladestation LS aufgrund des Reservierungswerts von 128 A beziehungsweise eines aktuell an der Ladestation insgesamt anliegenden Ladestroms i_{LS} = 4 x 32 A = 128 A, dass an dem ersten Ladepunkt LP₁ lediglich ein maximal zulässiger Grenzladestrom i_{LP1,zul} von näherungsweise 17 A beziehungsweise eine Ladeleistung von etwa 12 kW bereitgestellt werden kann. Der maximal zulässige Grenzladestrom i_{LP1,zul} ist insofern geringer als der über die Hardware des Ladepunkts spezifizierte maximal bereitstellbare Grenzladestrom i_{LG1,max}. Unter der Annahme, dass das erste Ladekabel LK₁ für einen maximalen Ladekabelstrom i_{LK1,max} von 32 A spezifiziert ist, ergibt sich der maximal zulässige Soll-Ladestrom i_{L1,max} = min {i_{LK1,max} = 32 A; i_{LP1,zul} = 17 A} zu i_{L1,max} = 17 A. Gegenüber der Ladestation LS wird insofern eine Ladestromreservierung in Höhe von 17 A durchgeführt, womit der Wert der Ladestromreservierung von 128 A auf 145 A steigt. Der Ladestrom i_{LS} der Ladestation LS insgesamt ist insofern gegeben als Summe der Ist-Ladeströme i_{Isti} an den einzelnen Ladepunkten LPᵢ: i_{LS} = ∑ i_{Isti} für i = 1 ... 10. Zudem wird ein dem ersten Ladepunkt LP₁ zugeordneter Datenspeicher DS₁ initial beschrieben oder zurückgesetzt. Beispielsweise wird in dem Datenspeicher eine I/0-Flag abgelegt.

Das in dem Fahrzeug FZ₁ vorgesehene Ladegerät empfängt den maximal zulässigen Soll-Ladestrom i_{L1,max} als PWM-Signal über das Ladekabel LK₁ und ist insofern instruiert, einen Ist-Ladestrom i_{Ist1} von nicht mehr als 17 A an 400 V 3-phasig einzustellen. Unter der Annahme, dass das erste Fahrzeug FZ₁ wie die anderen Fahrzeuge für einen fahrzeugseitig zulässigen Fahrzeug-Ladestrom i_{FZ,zul} = 32 A an 400 V 3-phasig ausgelegt ist, wird das erste Fahrzeug FZ₁ demzufolge nicht mit dem maximal möglichen Fahrzeug-Ladestrom i_{FZ1,zul} geladen.

Der fahrzeugseitig eingestellte Ist-Ladestrom i_{Ist1} = 17 A wird aufseiten der Ladestation LS über eine Detektoreinheit DE₁ ermittelt. Da der maximal zulässige Soll-Ladestrom i_{L1,max} dem Ist-Ladestrom i_{Ist} entspricht und demzufolge eine Ladestromreservierung über den Ist-Ladestrom i_{Ist} vorliegt, erfolgen zunächst keine weiteren Maßnahmen.

Wird nunmehr das siebte Fahrzeug FZ₇ von der Ladestation LS getrennt, wird eine Ladestromreservierung in Höhe von 32 A freigegeben. Die Ladestation LS erkennt aufgrund des am ersten Ladepunkt LP₁ gespeicherten Datenspeichers DS₁, dass das erste Fahrzeug FZ₁ möglicherweise mit einem höheren Ladestrom als dem Ist-Ladestrom i_{Ist1} = 17 A geladen werden kann. Jedenfalls stehen hierzu nunmehr vonseiten der Ladestation LS die Ressourcen zur Verfügung. Für den ersten Ladepunkt LP₁ wird insofern der maximal zulässige Grenzladestrom i_{LP1,zul} auf den maximal bereitstellbaren Grenzladestrom i_{LP1,max} auf 32 A angehoben. Da auch das Ladekabel LK₁ für 32 A spezifiziert ist, erhöht sich der maximal zulässige Soll-Ladestrom i_{L1,max} auf 32 A. Der neu eingestellte maximale Soll-Ladestrom i_{L1,max} wird dem Ladegerät des ersten Fahrzeugs FZ₁ mitgeteilt. Das Ladegerät wird den Ist-Ladestrom i_{Ist1} auf 32 A erhöhen mit der Folge, dass durch die Anpassung der Ladeparameter für das erste Fahrzeug FZ₁ die Ladestromreservierung auf 4 x 32 A = 128 A angepasst wird.

Unter der Annahme, dass das siebte Fahrzeug FZ₇ nicht von der Ladestation LS abgekoppelt ist und unverändert ebenso wie das achte, neunte und zehnte Fahrzeug FZ₈, FZ₉, FZ₁₀ mit 32 A geladen wird, stellt sich die Situation anders dar, wenn das erste Fahrzeug FZ₁ für einen maximalen Fahrzeug-Ladestrom i_{FZ,zul} von 16 A an 400 V 3-phasig ausgelegt ist. Beim Anschluss des ersten Fahrzeugs FZ₁ an den ersten Ladepunkt LP₁ empfängt das Ladegerät des ersten Fahrzeugs FZ₁ über das PWM-Signal die Information zum maximal zulässigen Soll-Ladestrom i_{L1,max} = 17 A. Vonseiten des Ladegeräts wird nunmehr festgestellt, dass der zur Verfügung gestellte maximale Soll-Ladestrom i_{L1,max} größer ist als der fahrzeugseitig zulässige Fahrzeug-Ladestrom i_{FZ1,zul}. Fahrzeugseitig wird demzufolge ein Ist-Ladestrom i_{Ist1} = min {i_{L1,max} = 41 A; i_{FZ1,zul} = 16 A} von 16 A eingestellt werden. Der Ist-Ladestrom i_{Ist1} wird wie gehabt über die zugeordnete erste Detektoreinheit DE₁ gemessen. Aufseiten der Ladestation LS wird festgestellt, dass das Ladestrom-Angebot i_{L1,max} nicht vollständig ausgeschöpft wurde. Insofern wird der Speicherwert im Datenspeicher DS₁ umgesetzt. Der umgesetzte Datenspeicher DS₁ für den ersten Ladepunkt LP₁ kennzeichnet, dass vonseiten des Fahrzeugs FZ₁ ein höherer Ladestrom als der Ist-Ladestrom i_{Ist1} abgelehnt wurde. Wird nunmehr das siebte Fahrzeug FZ₇ vom siebten Ladepunkt LP₇ der Ladestation LS getrennt, wird demzufolge trotz der Vergrößerung der freien Ressourcen an dem Ladepunkt LP₁ dem ersten Fahrzeug FZ₁ ein höherer Ladestrom nicht angeboten werden.

Die in Figur 1 exemplarisch dargestellte Spezifikation der Ladestation LS mit den verteilt angeordneten Ladepunkten LP₁, LP₂, ... LP₁₀ ist nicht beschränkend im Sinne der Erfindung. Beispielsweise können die Detektoreinheiten DE₁, DE₂, ... DE₁₀ in den Ladepunkten LP₁, LP₂, ... LP₁₀ oder in der Zentralkomponente ZK vorgesehen sein. Ebenso können die Datenspeicher DS₁, DS₂, ... DS₁₀ verteilt in den Ladepunkten LP₁, LP₂, ... LP₁₀ vorgesehen werden. Selbstverständlich kann abweichend von der gewählten Konfiguration eine Ladestation weniger als 10 Ladepunkte oder mehr als 10 Ladepunkte aufweisen.

Lediglich aus Gründen der Veranschaulichung wurde das erfindungsgemäße Verfahren unter der Annahme einer immer gleichen Spannung von 400 V und einem 3-phasigen Laden anhand der unterschiedlichen Ladeströme von 16 A, 17 A beziehungsweise 32 A diskutiert. Selbstverständlich kann abhängig von der Spezifikation der Ladepunkte LP₁, LP₂, ... LP₁₀ beziehungsweise der Ladestation LS einerseits und der Spezifikation der Fahrzeuge FZ₁, FZ₂, ... FZ₁₀ andererseits für jeden Ladepunkt LP₁, LP₂, ... LP₁₀ eine individuelle Spannung von beispielsweise 230 V oder 400 V sowie ein 1-phasiges oder 3-phasiges Laden bei veränderlichen Spannungen realisiert werden. Die Ressourcen der Ladestation LS sind insofern leistungsmäßig spezifiziert und beschränkt. Ein 1-phasiges Laden an 230 V bei 16 A entspricht etwa einer Leistung von 3,7 kW, ein 1-phasiges Laden an 230 V bei 32 A 7,4 kW, ein 3-phasiges Laden an 400 V bei 16 A 11 kW, ein 3-phasiges Laden an 400 V bei 32 A 22 kW und ein 3-phasiges Laden an 400 V bei 63 A 43 kW. Die Spezifikation der Ladestation LS ergibt sich im vorliegenden Beispiel zu 100 kW. Es ist somit möglich, an den zehn Ladepunkten LP₁, LP₂, ... LP₁₀ verteilt über die drei Phasen zehn Fahrzeuge gleichzeitig bei 16 A 1-phasig an 230 V zu laden, wobei der Ist-Ladestrom i_{Ist1}, i_{Ist2}, ... i_{Ist10} durch den fahrzeugseitig maximal zulässigen Ladestrom i_{FZ1,zul}, i_{FZ2,zul}, ... i_{FZ10,zul} begrenzt ist und die Hardwarespezifikation der Ladestation LS unbeachtlich ist. Die Ladestromreservierung kann nach Phasen getrennt erfolgen.

In dem dargestellten Ausführungsbeispiel der Erfindung ist davon ausgegangen worden, dass im Falle eines Ressourcenkonflikts möglichst viele Fahrzeuge mit dem Grenzladestrom i_{LPi,max} geladen werden und dass ein neu hinzukommendes Fahrzeug FZ₁ als einziges Fahrzeug mit einem reduzierten Grenzladestrom i_{L1,max} geladen werden soll. Weitere Fahrzeuge, die an die Ladestation angeschlossen werden, würden zunächst solange nicht geladen, bis vorher angeschlossene Fahrzeuge vollständig geladen sind oder von der Ladestation LS getrennt werden oder der Ist-Ladestrom für die gegenwärtig ladenden Fahrzeuge sinkt mit der Folge, dass Ressourcen frei werden und den weiteren Fahrzeugen zugewiesen werden. Selbstverständlich kann im Rahmen des erfindungsgemäßen Verfahrens auch ein anderes Lastmanagement zur Anwendung kommen. Beispielsweise könnten die vorhandenen Ressourcen (100 kW beziehungsweise 145 A) beim Anschluss des neuen Fahrzeugs FZ₁ an den ersten Ladepunkt LP₁ gleichmäßig auf die nunmehr fünf angeschlossenen Fahrzeuge FZ₁, FZ₇, FZ₈, FZ₉, FZ₁₀ verteilt werden. In diesem Fall würde jedes Fahrzeug mit zirka 20 kW an die Ladestation LS angebunden sein beziehungsweise mit etwa 29 A geladen. Beispielsweise kann vorgesehen sein, dass verschiedene Fahrzeuge reihum für eine vorgegebene Zeitdauer mit dem hardwareseitig limitierten Grenzladestrom i_{Li,max} geladen werden und somit immer unterschiedliche Fahrzeuge mit einem geringeren Ladestromangebot konfrontiert sind. Beispielsweise kann vorgesehen sein, dass verschiedene Fahrzeuge mit unterschiedlicher Priorität geladen werden. Es ist insofern denkbar, dass Einsatzfahrzeuge von Feuerwehr oder Polizei mit höchster Priorität geladen werden, dass nächster Priorität Firmenfahrzeuge oder Fahrzeuge von Premiumkunden geladen werden und dass anschließend alle weiteren Fahrzeuge geladen werden.

Als Fahrzeuge im Sinne der Erfindung gelten alle Automobile (PKW, LKW, Wohnmobile, Zweiräder usw.), Schienenfahrzeuge (insbesondere Lokomotiven), Wasserfahrzeuge (Schiffe), Luftfahrzeuge sowie Anhänger (Wohnanhänger), mobile Verkaufsstände usw.

Gleiche Bauteile und Bauteilfunktionen sind durch gleiche Bezugszeichen gekennzeichnet.

## Patentansprüche

1. Verfahren zum Laden eines elektrisch betreibbaren Fahrzeugs (FZᵢ) an einem Ladepunkt (LPᵢ) einer eine Mehrzahl von Ladepunkten (LP₁, LP₂, ... LPₙ) aufweisenden und an ein Versorgungsnetz (VN) angeschlossenen Ladestation (LS) umfassend die folgenden Schritte:
- unter Berücksichtigung eines seitens eines Ladekabels (LKᵢ) zulässigen maximalen Ladekabelstroms i_{LKi,max} und unter Berücksichtigung eines maximal zulässigen Grenzladestroms i_{LPi,zul} auf Seiten des Ladepunkts (LPᵢ) der Ladestation (LS) wird ein maximal zulässiger Soll-Ladestrom i_{Li,max} zum Laden des Fahrzeugs bestimmt;
- der maximal zulässige Soll-Ladestrom i_{Li,max} wird dem Fahrzeug (FZᵢ) vonseiten der Ladestation mitgeteilt;
- ein Ist-Ladestrom i_{Ist,i}, welcher über ein in dem Fahrzeug (FZᵢ) vorgesehenes Ladegerät unter Beachtung des maximal zulässigen Soll-Ladestroms i_{Li,max} und eines fahrzeugseitig maximal zulässigen Fahrzeug-Ladestroms i_{FZi,zul} für den Ladepunkt (LPᵢ) eingestellt wird, wird aufseiten der Ladestation (LS) gemessen;
**dadurch gekennzeichnet, dass** an der Ladestation (LS) für den Ladepunkt (LPᵢ) eine Ladestromreservierung in Höhe eines für den Ladepunkt (LPᵢ) durch die Hardware des Ladepunkts (LPᵢ) spezifizierten, maximal bereitstellbaren Grenzladestroms i_{LPi,max} und/oder des dem Fahrzeug (FZᵢ) angebotenen maximal zulässigen Soll-Ladestroms i_{Li,max} durchgeführt wird, dass eine Ladestromdifferenz zwischen dem seitens der Ladestation (LS) dem Fahrzeug (FZᵢ) angebotenen, maximal zulässigen Soll-Ladestrom i_{Li,max} oder dem an dem Ladepunkt (LPᵢ) maximal bereitstellbaren Grenzladestrom i_{LPi,max} einerseits und dem gemessenen Ist-Ladestrom i_{Ist,i} andererseits bestimmt wird und dass die Ladestromreservierung hinsichtlich der bestimmten Ladestromdifferenz freigegeben wird.

2. Verfahren nach Anspruch 1, **dadurch gekennzeichnet, dass** mit dem ersten Angebot eines maximal zulässigen Soll-Ladestroms i_{Li,max} an das zu ladende Fahrzeug (FZᵢ) ein der Ladestation (LS) zugeordneter und für den Ladepunkt (LPᵢ) bestimmter Datenspeicher (DSᵢ) beschrieben wird und dass der Datenspeicher (DSᵢ) aktualisiert und/oder gelöscht wird, sobald fahrzeugseitig erstmalig der Ist-Ladestrom i_{Ist,i} geringer eingestellt wird als der vonseiten der Ladestation (LS) angebotene maximal zulässige Soll-Ladestrom i_{Li,max}.

3. Verfahren nach Anspruch 1 oder 2, **dadurch gekennzeichnet, dass** dem Fahrzeug (FZᵢ), sobald an diesem der Ist-Ladestrom i_{Ist,i} erstmalig niedriger eingestellt wird als der maximal zulässige Soll-Ladestrom i_{Li,max}, und/oder der Datenspeicher (DSᵢ) aktualisiert und/oder gelöscht wird, für die Dauer des laufenden Ladevorgangs und/oder eine Ladeintervall und/oder eine gewisse Zeitdauer kein höherer Ladestrom angeboten wird als der fahrzeugseitig eingestellte Ist-Ladestrom i_{Ist,i} im Zeitpunkt der erstmaligen Abweichung vom maximal zulässigen Soll-Ladestrom i_{Li,max} nach unten.

4. Verfahren nach einem der Ansprüche 1 bis 3, **dadurch gekennzeichnet, dass** ein seitens der Ladestation (LS) an der Mehrzahl der Ladepunkte (LP₁, LP₂, ... LPₙ) insgesamt bereitstellbarer maximaler Volllastladestrom i_{LS,max} als dynamischer Volllastladestrom zeitlichen Schwankungen unterliegt.

5. Verfahren nach einem der Ansprüche 1 bis 4, **dadurch gekennzeichnet, dass** der maximal zulässige Grenzladestrom i_{LPi,zul} für einen einzigen Ladepunkt (LPᵢ) dynamisch festgelegt wird und eine Neufestlegung des unter Berücksichtigung des maximal bereitstellbaren Grenzladestroms i_{LPi,max} ermittelte maximal zulässigen Soll-Ladestroms i_{Li,max} insbesondere vorgenommen wird, wenn ein neues Fahrzeug (FZᵢ) an einen anderen Ladepunkt (LP₁, ... LPᵢ₋₁, LPᵢ₊₁, ... LPₙ) der Ladestation (LS) angeschlossen wird und/oder wenn die Ladestromreservierung für die Ladestation (LS) geändert wird und/oder wenn der für die Ladestation (LS) festgelegte maximale Volllastladestrom i_{LS,max} geändert wird.

6. Verfahren nach einem der Ansprüche 1 bis 5, **dadurch gekennzeichnet, dass** der dem Fahrzeug (FZᵢ) angebotene maximal zulässige Soll-Ladestrom i_{Li,max} im Zuge der Neufestlegung desselben erhöht wird, sofern der Ist-Ladestrom i_{Ist,i} geringer ist als der an dem Ladepunkt (LPᵢ) maximal zulässiger Soll-Ladestrom i_{Li,max} und sofern der Datenspeicher (DSᵢ) des Ladepunkts (LPᵢ) nicht aktualisiert und/oder gelöscht wurde.

7. Verfahren nach einem der Ansprüche 1 bis 6, **dadurch gekennzeichnet, dass** an dem Ladepunkt (LPᵢ) der maximal bereitstellbare Grenzladestrom i_{LPi,max} als maximal zulässiger Soll-Ladestrom i_{Li,max} gewählt wird, sofern eine Differenz zwischen dem vonseiten der Ladestation (LS) maximal bereitstellbaren Volllastladestrom i_{LS,max} und der Ladestromreservierung wenigstens dem für den Ladepunkt (LPᵢ) bestimmten maximal bereitstellbaren Grenzladestrom i_{LPi,max} entspricht und der vonseiten des Ladekabels (LKᵢ) maximal zulässige Ladekabelstrom i_{LKi,max} wenigstens dem für den Ladepunkt (LPᵢ) bestimmten maximal bereitstellbaren Grenzladestrom i_{LPi,max} entspricht.

8. Verfahren nach einem der Ansprüche 1 bis 7, **dadurch gekennzeichnet, dass** der zur Bestimmung des Ist-Ladestroms i_{Ist,i} gemessene Stromwert zugleich genutzt wird, um die an das Fahrzeug (FZᵢ) übertragene Energiemenge zu bestimmen und den Ladevorgang abzurechnen, und/oder dass der Ist-Ladestrom i_{Ist,i} über eine Detektoreinheit (DEᵢ) ermittelt wird.

9. Verfahren nach einem der Ansprüche 1 bis 8, **dadurch gekennzeichnet, dass** der Soll-Ladestrom i_{Li,max} für den Ladepunkt LPᵢ aus dem Minimum des seitens des Ladekabels (LKᵢ) maximal zulässigen Ladekabelstroms i_{LKi,max} und dem an dem Ladepunkt (LPᵢ) maximal zulässigen Grenzladestrom i_{LPi zul} bestimmt wird.

10. Verfahren nach einem der Ansprüche 1 bis 9, **dadurch gekennzeichnet, dass** der maximal zulässige Grenzladestrom i_{LPi zul} für den Ladepunkt (LPᵢ) bestimmt wird als das Minimum der Differenz zwischen dem vonseiten der Ladestation (LS) maximal bereitstellbaren Volllastladestrom i_{LS,max} und der Ladestromreservierung einerseits und dem an dem Ladepunkt (LPᵢ) maximal bereitstellbaren Grenzladestrom i_{LPi,max} andererseits.

11. Verfahren nach einem der Ansprüche 1 bis 10, **dadurch gekennzeichnet, dass** die Ladestromreservierung wenigstens teilweise freigegeben wird, wenn der Soll-Ladestrom i_{Li,max} kleiner ist als der seitens des Ladepunkts (LPᵢ) maximal bereitstellbare Grenzladestrom i_{LPi,max} und/oder wenn der Ist-Ladestrom i_{Ist,i} kleiner ist als der maximal zulässige Soll-Ladestrom i_{Li,max}.

## Claims

1. Method for charging an electrically operated vehicle (FZᵢ) at a charging point (LPᵢ) of a charging station (LS) connected to a supply network (VN) and having a plurality of charging points (LP₁, LP₂, ... LPₙ), said method comprising the following steps:
- based on a permissible maximum charging cable current i_{LKi,max} available from a charging cable (LKᵢ) and a maximum permissible limit charging current i_{LPi,zul} available from the charging point (LPᵢ) of the charging station (LS), a maximum permissible target charging current i_{Li,max} is determined for charging the vehicle,
- the maximum permissible target charging current i_{Li,max} is communicated to the vehicle (FZᵢ) from the charging station;
- an actual charging current i_{Ist,i} adjusted for the charging point (LPᵢ) by means of a charging device provided in the vehicle (FZᵢ) taking account of the maximum permissible target charging current i_{Li,max} and a maximum permissible vehicle charging current i_{FZi,zul} at the vehicle are measured on the part of the charging station (LS);
**characterised in that** at the charging station (LS) for the charging point (LPᵢ) a charging current reserve equal to a maximum available limit charging current i_{LPi,max} specified for the charging point (LPᵢ) by means of the hardware of the charging point (LPᵢ) and/or to the maximum permissible target charging current i_{Li,max} offered to the vehicle (FZᵢ) is provided, such that a charging current difference between the maximum permissible target charging current i_{Li,max} offered to the vehicle (FZᵢ) by means of the charging station (LS) or the maximum available limit charging current i_{LPi,max} at the charging point (LPᵢ) on the one hand, and the measured actual charging current i_{Ist,i} on the other hand, is determined and such that the reserve charging current is released in respect of the charging current difference determined.

2. Method according to claim 1, **characterised in that** a data memory (DSᵢ) assigned to the charging station (LS) and specified for the charging point (LPᵢ) is written with the first offer of a maximum permissible target charging current i_{Li,max} to the vehicle (FZᵢ) which is to be charged, and **in that** the data memory (DSi) is updated and/or deleted as soon as the actual charging current i_{Ist,i} is for the first time adjusted on the part of the vehicle to be lower than the maximum permissible target charging current i_{Li,max} offered by the charging station (LS).

3. Method according to claim 1 or claim 2, **characterised in that** as soon as the actual charging current i_{Ist,i} on the vehicle (FZᵢ) is for the first time adjusted to be lower than the maximum permissible target charging current i_{Li,max} and/or the data memory (DSᵢ) is updated and/or deleted, no greater a charging current is offered to the vehicle (FZᵢ) for the duration of the ongoing charging procedure and/or a charging interval and/or a particular period than the actual charging current i_{Ist,i} adjusted on the part of the vehicle at the time of the first downward deviation from the maximum permissible target charging current i_{Li,max}.

4. Method according to any one of claims 1 to 3, **characterised in that** a total available maximum full load charging current i_{LS,max} on the part of the charging station (LS) is, as a dynamic full load charging current, subject to temporal fluctuations at a plurality of the charging points (LP₁, LP₂, ... LPₙ).

5. Method according to any one of claims 1 to 4, **characterised in that** the maximum permissible limit charging current i_{LPi,zul} for a single charging point (LPᵢ) is established dynamically and the maximum permissible target charging current i_{Li,max} determined in consideration of the maximum available limit charging current i_{LPi,max} is set again in particular when a new vehicle (FZᵢ) is connected to a different charging point (LP₁, ... LPᵢ₋₁, LPᵢ₊₁, ... LPₙ) of the charging station (LS) and/or when the charging current reserve for the charging station (LS) is altered and/or when the maximum full load charging current i_{LS,max} determined for the charging station (LS) is altered.

6. Method according to any one of claims 1 to 5, **characterised in that** the maximum permissible target charging current i_{Li,max} offered to the vehicle (FZᵢ) is increased in the course of setting it anew, provided the actual charging current i_{Ist,i} is lower than the maximum permissible target charging current i_{Li,max} at the charging point (LPᵢ) and provided the data memory (DSᵢ) of the charging point (LPᵢ) was not updated and/or deleted.

7. Method according to any one of claims 1 to 6, **characterised in that** the maximum available limit charging current i_{LPi,max} is selected as the maximum permissible target charging current i_{Li,max} at the charging point (LPᵢ), provided a difference between the maximum available full load charging current i_{LS,max} from the charging station (LS) and the charging current reserve correspond at least to the maximum available limit charging current i_{LPi,max} determined for the charging point (LPᵢ) and the maximum permissible charging cable current i_{LKi,max} for the charging cable (LKᵢ) corresponds at least to the maximum available limit charging current i_{LPi,max} determined for the charging point (LPᵢ).

8. Method according to any one of claims 1 to 7, **characterised in that** the current value measured for determining the actual charging current i_{Ist,i} is used at the same time in order to determine the quantity of energy transferred to the vehicle (FZᵢ) and to account for the charging process, and/or **in that** the actual charging current i_{Ist,i} is determined by means of a detector unit (DEᵢ).

9. Method according to any one of claims 1 to 8, **characterised in that** the target charging current i_{Li,max} for the charging point LPᵢ is determined from the lower of the maximum permissible charging cable current i_{LKi,max} for the charging cable (LKᵢ) and the maximum permissible limit charging current i_{LPi,zul} at the charging point (LPᵢ).

10. Method according to any one of claims 1 to 9, **characterised in that** the maximum permissible limit charging current i_{LPi,zul} is determined for the charging point (LPᵢ) as the lower of the difference between the maximum available full load charging current i_{LPi,max} from the charging station (LS) and the charging current reserve on the one hand and the maximum available limit charging current i_{LPi,max} at the charging point (LPᵢ) on the other hand.

11. Method according to any one of claims 1 to 10, **characterised in that** the charging current reserve is released at least partially when the target charging current i_{Li,max} is lower than the maximum available limit charging current i_{LPi,max} available at the charging point (LPᵢ) and/or when the actual charging current i_{Ist,i} is lower than the maximum permissible target charging current i_{Li,max}.

## Revendications

1. Procédé de charge d'un véhicule (FZᵢ) pouvant fonctionner électriquement à un point de charge (LPᵢ) d'une station de charge (LS) présentant une pluralité de points de charge (LP₁, LP₂, ... LPₙ) et raccordée à un réseau d'alimentation (VN), comprenant les étapes suivantes :
- un courant de charge de consigne i_{Li,max} maximal admissible destiné à la charge du véhicule est déterminé en tenant compte d'un courant de câble de charge i_{LKi,max} maximal admissible du côté d'un câble de charge (LKᵢ) et en tenant compte d'un courant de charge limite i_{LPi,zul} maximal admissible du côté du point de charge (LPᵢ) de la station de charge (LS),
- le courant de charge de consigne i_{Li,max} maximal admissible est communiqué au véhicule (FZᵢ) du côté de la station de charge ;
- un courant de charge réel i_{Ist,i}, lequel est réglé par l'intermédiaire d'un chargeur ménagé dans le véhicule (FZᵢ) en tenant compte du courant de charge de consigne i_{Li,max} maximal admissible et d'un courant de charge du véhicule i_{FZi,zul} maximal admissible du côté du véhicule pour le point de charge (LPᵢ), est mesuré du côté de la station de charge (LS) ;
**caractérisé en ce que** sur la station de charge (LS), une réservation de courant de charge à hauteur d'un courant de charge limite i_{LPi,max} pouvant être fourni au maximum, spécifié pour le point de charge (LPᵢ) par le matériel électronique du point de charge (LPᵢ) et/ou du courant de charge de consigne i_{Li,max} maximal admissible proposé au véhicule (FZᵢ) est réalisée pour le point de charge (LPᵢ), **en ce qu'**une différence de courant de charge entre le courant de consigne i_{Li,max} maximal admissible proposé au véhicule (FZᵢ) du côté de la station de charge (LS) ou le courant de charge limite i_{LPi,max} pouvant être fourni au maximum au point de charge (LPᵢ), d'une part, et le courant de charge réel i_{Ist,i} mesuré, d'autre part, est déterminée et **en ce que** la réservation de courant de charge est libérée au regard de la différence de courant de charge déterminée.

2. Procédé selon la revendication 1, **caractérisé en ce qu'**avec la première proposition, faite au véhicule (FZᵢ) à charger, d'un courant de charge de consigne i_{Li,max} maximal admissible, une mémoire de données (DSᵢ) associée à la station de charge (LS) et destinée au point de charge (LPᵢ) est décrite et **en ce que** la mémoire de données (DSᵢ) est mise à jour et/ou effacée dès que le courant de charge réel i_{Ist,i} est réglé, la première fois côté véhicule, de manière inférieure au courant de consigne i_{Li,max} maximal admissible proposé du côté de la station de charge (LS).

3. Procédé selon la revendication 1 ou 2, **caractérisé en ce que**, dès que le courant de charge réel i_{Ist,i} est réglé sur le véhicule (FZᵢ) de manière plus basse que le courant de charge de consigne i_{Li,max} maximal admissible et/ou dès que la mémoire de données (DSᵢ) est mise à jour et/ou effacée, aucun courant de charge plus élevé que le courant de charge réel i_{Ist,i} réglé côté véhicule au moment de la première déviation vers le bas du courant du courant de charge de consigne i_{Li,max} maximal admissible n'est proposé au véhicule (FZᵢ) pour la durée de l'opération de charge en cours et/ou pour un intervalle de charge et/ou pour une certaine durée.

4. Procédé selon l'une quelconque des revendications 1 à 3, **caractérisé en ce qu'**un courant de charge maximale i_{LSmax} pouvant être fourni en tout du côté de la station de charge (LS) à la pluralité des points de charge (LP₁, LP₂, ... LPₙ) en tant que courant de charge maximale dynamique est soumis à des variations temporelles.

5. Procédé selon l'une quelconque des revendications 1 à 4, **caractérisé en ce que** le courant de charge limite i_{LPi,zul} maximal admissible pour un seul point de charge (LPᵢ) est défini dynamiquement et **en ce qu'**une nouvelle détermination du courant de charge de consigne i_{Li,max} maximal admissible déterminé, en tenant compte du courant de charge limite i_{LPi,max} pouvant être fourni au maximum, est notamment réalisée lorsqu'un nouveau véhicule (FZᵢ) est raccordé à un autre point de charge (LP₁, ... LPi₋₁, LPᵢ₊₁, ... LPₙ) de la station de charge (LS) et/ou lorsque la réservation de courant de charge pour la station de charge (L) est modifiée et/ou lorsque le courant de charge maximale i_{LS,max} défini pour la station de charge (LS) est modifié.

6. Procédé selon l'une quelconque des revendications 1 à 5, **caractérisé en ce que** le courant de charge de consigne i_{Li,max} maximal admissible proposé au véhicule (FZᵢ) est augmenté au cours de la nouvelle détermination de celui-ci, dans la mesure où le courant de charge réel i_{Ist,i} est inférieur au courant de charge de consigne i_{Li,max} maximal admissible au point de charge (LPᵢ) et dans la mesure où la mémoire de données (DSᵢ) du point de charge (LPᵢ) n'est pas mise à jour et/ou a été effacée.

7. Procédé selon l'une quelconque des revendications 1 à 6, **caractérisé en ce que** le courant de charge limite i_{LPi,max} pouvant être fourni au maximum au point de charge (LPᵢ) est sélectionné comme courant de charge de consigne i_{Li,max} maximal admissible, dans la mesure où une différence entre le courant de charge maximale i_{LSmax} pouvant être fourni au maximum du côté de la station de charge (LS) et la réservation de courant de charge correspond au moins au courant de charge limite i_{LPi,max} pouvant être fourni au maximum déterminé pour le point de charge (LPᵢ) et dans la mesure où le courant de câble de charge i_{LKi,max} maximal admissible du côté du câble de charge (LKᵢ) correspond au moins au courant de charge limite i_{LPi,max} pouvant être fourni au maximum déterminé pour le point de charge (LPᵢ).

8. Procédé selon l'une quelconque des revendications 1 à 7, **caractérisé en ce que** la valeur de courant mesurée pour déterminer le courant de charge réel i_{Ist,i} est exploitée en même temps afin de déterminer la quantité d'énergie transmise au véhicule (FZᵢ) et de taxer l'opération de charge et/ou **en ce que** le courant de charge réel i_{Ist,i} est détecté par l'intermédiaire d'une unité de détection (DEᵢ).

9. Procédé selon l'une quelconque des revendications 1 à 8, **caractérisé en ce que** le courant de charge de consigne i_{Li,max} pour le point de charge LPᵢ est déterminé à partir du minimum du courant de câble de charge i_{LKi,max} maximal admissible du côté du câble de charge (LKᵢ) et du courant de charge limite i_{LPi,zul} maximal admissible au point de charge (LPᵢ).

10. Procédé selon l'une quelconque des revendications 1 à 9, **caractérisé en ce que** le courant de charge limite i_{LPi,zul} maximal admissible pour le point de charge (LPᵢ) est déterminé en tant que le minimum de la différence entre le courant de charge maximale i_{LSmax} pouvant être fourni au maximum du côté de la station de charge (LS) et la réservation de courant de charge, d'une part, et le courant de charge limite i_{LPi,max} pouvant être fourni au maximum, d'autre part.

11. Procédé selon l'une quelconque des revendications 1 à 10, **caractérisé en ce que** la réservation de courant de charge est libérée au moins en partie lorsque le courant de charge de consigne i_{Li,max} est inférieur au courant de charge limite i_{LPi,max} pouvant être fourni au maximum du côté du point de charge (LPᵢ) et/ou lorsque le courant de charge réel i_{Ist,i} est inférieur au courant de charge de consigne i_{Li,max} maximal admissible.
